Europäisches Patentamt

(19) European Patent Office

Office européen des brevets

(11) Publication number: **0 237 162 B1**

(12) **EUROPEAN PATENT SPECIFICATION**

(45) Date of publication of patent specification:
21.08.91 Bulletin 91/34

(51) Int. Cl.⁵: **A23L 1/176**

(21) Application number: **87300736.3**

(22) Date of filing: **28.01.87**

(54) Edible particulate material for coating foodstuffs.

The file contains technical information
submitted after the application was filed and
not included in this specification

(56) References cited:
US-A- 4 068 009
PATENT ABSTRACTS OF JAPAN, vol. 7, no.
185 (C-181)[1330], 13th August 1983; & JP-A-58
89 152 (AJINOMOTO K.K.) 27-05-1983

(30) Priority: **30.01.86 GB 8602312**

(43) Date of publication of application:
**16.09.87 Bulletin 87/38**

(73) Proprietor: **RANKS HOVIS McDOUGALL PLC
RHM Centre P.O. Box 178 Alma Road
Windsor Berkshire SL4 3ST (GB)**

(45) Publication of the grant of the patent:
**21.08.91 Bulletin 91/34**

(72) Inventor: **Bradford, Jane Leonie
16 Cavendish Road
Guiseley Leeds LS20 8DW (GB)**
Inventor: **Parsons, James Leigh
Bray House Chunal Lane
Glossop Derbyshire SK13 9PW (GB)**

(84) Designated Contracting States:
**BE DE ES FR IT NL SE**

(74) Representative: **Turner, Paul Malcolm et al
URQUHART DYKES & LORD 91 Wimpole
Street
London W1M 8AH (GB)**

(56) References cited:
EP-A- 0 017 338
FR-A- 1 454 230

## Description

This invention relates to food products which are coated with edible particulate material e.g. crumb coated.

A well known method for imparting baking and grilling characteristics to batter and crumb coated products is to flash fry the product prior to freezing. The so-called "fish finger" is probably the best known of such products and the technology associated with its production is highly advanced.

In the production of, for example, fish fingers, fish pieces, fresh or frozen, are battered and crumbed by conventional coating machines. In order to ensure that the batter is heat-set to the surface of the fish piece it is flash fried in a continuous deep fat frier at from between 160°C to 190°C for from 25 to 45 seconds. This ensures that the crumb becomes firmly embedded in the batter surface so that loss of crumb from the surface is minimised during subsequent frozen storage and use by the housewife. The housewife cooks the product by grilling, baking or frying from its frozen state. The consumer advantage of uniformity and ease of cooking such products is immediately apparent. Sufficient fat should be present in the product to prevent burning on grilling.

While frozen batter and crumb coated products which have not been flash fried are available they require to be fried to achieve a satisfactory cooked appearance. Baking and grilling of these products results in a dry, burnt coating unless cooked in the presence of fat or oil.

The disadvantages in the present commercial production of flash fried products include the following :-

1. The flash frying process requires expensive deep fat friers which are a potential fire hazard. A typical installation requires a 9 metre x 1.25 metre continuous frier, the fat or oil in which is maintained at a temperature of about 190°C.

2. With the fat or oil at the high temperature of about 190°C and with an immersion time of about 25 seconds, 2%-4% of the moisture content is driven off from the fish. This reduces the final retail weight and palatability of the product.

3. The high temperature used leads to a fat or oil loss through volatilisation and an increased rate of fat or oil degradation.

4. The energy costs in frying and refreezing are considerable.

5. The ratio of volume of product to volume of fat or oil for maximum oil stability is critical and difficult to attain in a continuous process.

6. Contamination of the fat or oil due to oxidative or hydrolytic rancidity is a constant problem and is difficult to monitor in the continuous process.

Various proposals have been put forward to overcome the problems of deep fat fried foods, both as far as the method of preparing such foods and the amount of fat contained within the foods. For example, EP0091497 describes a process for preparing a coated frozen fish product wherein a frozen fish piece is initially battered, then breaded a first time, thereafter coated with an edible fat in a liquid form having a melting point of less than 50°C, and finally breaded a second time before being frozen. In accord with that proposal, it appears that the amount of fat applied to the fish piece is from 8-14% by weight based upon the weight of the final fish product. US4518620 describes a process for preparing breaded foods which, when baked, have the desirable characteristics of the deep-fat fried counterpart, which is made possible by coating food with a fat emulsion, breading and thereafter overcoating with an egg white solution. Once again, a high fat containing product is produced.

US4068009 describes the use of breadcrumbs which have edible oil applied to the surface of the breadcrumbs, coated onto a comestible covered in batter. The comestible is subsequently baked. The process of 4068009 to form the breadcrumbs entails this simple mixing of components, for example, in a coating kettle. There is no control of the amount of fat or oil which is used and nor is there a precooking process prior to the coated breadcrumbs being applied to the batter.

Other prior art including US4260637 ; US4218485; US4208442 ; US4068009 ; US3952110 ; US3852501 ; US3843827 ; US3586512 ; EP-A-17338 and EP-A-109226 all disclose various methods of providing crumb for coating onto foodstuffs which have many of the disadvantages outlined above.

It is the main object of the present invention to provide a method of preparing an edible particulate material, such as crumb, for coating a food product which minimise the disadvantages of the present commercial production of flash fried product, as well as producing a product which has a low fat content. Although crumb has been specifically mentioned, the problems of preparing edible particulate material are not limited to any one type of edible particulate material and apply generally.

According to the present invention, there is provided a method of preparing edible particulate material for coating foodstuff, which comprises homogeneously mixing edible particulate material comprising bread crumb, expanded starch or Japanese crumb, or based on potatoes or rice, whith edible oil or fat at a temperature which keeps the oil or fat liquid and, simultaneously with or after the mixing step, heat treating the mixture in air which is at a temperature in the range of 105°C to 300°C, the resulting mixture being held at that temperature for a period of time in the range of 15 seconds to 25 minutes before it is applied to the foodstuff.

The process may be conducted as a two stage or a single stage process although the former is preferred.

The edible particulate material may include other edible materials to enhance the particulate material being treated in accord with the present invention. These materials may include starches, sugar, milk products such as whey, gluten, soya such as soya oil, food colourings, emulsifiers, taste modifiers, spices etc.

The edible particulate material is generally at ambient temperature at the beginning of this process.

The preferred water content of the edible particulate material as it goes into the heat treating process is generally less than 50% by weight, although preferred ranges are within the range of from totally dry to 40% moisture by weight. More preferred ranges are less than 30% by weight and particularly preferred ranges are 2% - 15% by weight of moisture within the edible particulate material. The density of the edible particulate material is generally in the range 0.1g/cc to 0.5g/cc. Within this range, European breadcrumb generally has a density of 0.40g/cc, expanded farinaceous materials have a density of 0.20g/cc and Japanese crumb has a density of 0.25g/cc. in general, the average particle size of the edible particulate material is in the range 75 microns to 50mm, the preferred range being 100 microns to 20mm.

The particular types of oils or fats which can be used for the process of the present invention include corn oil, soya oil, sunflower oil, butter oil, rapeseed oil, as well as various fats, such as hardened hydrogenated vegetable oil, cocoa butter or animal fat or any combination thereof.

In general, the melting point of the fat should be below 60°C and preferably below 37°C which is about body temperature. Such fats do not cause palate cling when eaten.

Within the parameters outlined above, any edible oil or fat can be used with or without the present of emulsifiers. In addition emulsions of the oil or fat in water can be used together with, if required an emulsifier to extend the fat. This also may have an advantage in reducing the moisture loss of the finally coated food product.

The method of the present invention is conducted within the temperature range of 105°C-300°C and preferably within the range 105°C-250°C. The most preferred range is between 125°C-225°C in order that a flash frying process may occur. With regard to temperature range, the higher the temperature range, the shorter time required to treat the foodstuff of the present invention.

Edible oil or fat can be added to the edible particulate material in an amount of 5%-35% by weight based on the weight of the edible crumbs being coated. The optimum rate of addition of oil or fat is betwenn 7$\frac{1}{2}$-25% by weight of the total edible coating material.

The method of the present invention can be performed in a number of different types of apparatus preferably continuous processing apparatus including hot air dryers, ring dryers and hot air fluid bed dryers, which may include a mechanism to keep the coated product moving such as a vibrator. In this way, a moving solid phase is provided. The apparatus is generally maintained at the temperatures indicated above. The edible oil or fat can be mixed with the edible particulate material in various types of mixer including Z-blade mixers, rotating paddle type mixers etc. Alternatively, the edible oil or fat can be mixed with the edible particulate material during heating. In addition, the mixers may optionally be heated.

It is preferred to conduct the process of the present invention using a Z-blade mixer and a continuous oven In addition, this apparatus has advantages in that a metered amount of edible fat or oil may be added to achieve the optimum oil or fat addition level. Other advantages of a continuous oven are that a thin layer of the edible particulate material is formed allowing the material to reach its optimum coating temperature faster. The oil is added in a sprayed form and is generally pre-heated to ensure that it is at optimum temperature to heat the edible particulate material.

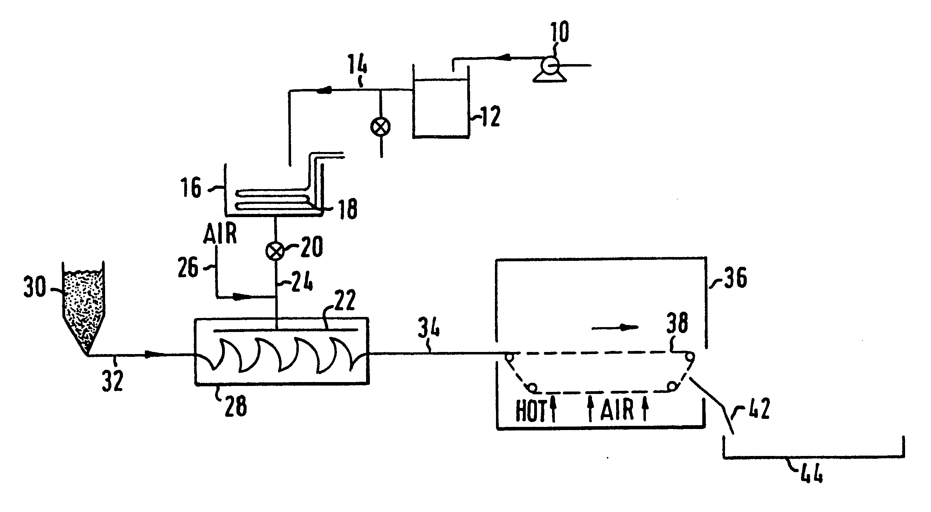

The present invention will be further described with reference to the accompanying drawing which shows a typical layout of apparatus for carrying out the method of the invention. The drawing is in the form of a flow diagram.

Oil is fed via a metering pump 10 to a top-up and expansion tank 12 and via a pipe 14 to an oil reservoir 16 which includes a heating element 18. From the oil reservoir 16 the oil passes through a valve 20 to a spray head 22 via a line 24. An air line 26 injects air into the oil to ensure that the oil is formed into a fine oil spray. The spray head 22 is contained in a mixer 28 which may be a Z-blade mixer.

The hopper 30 contains edible particulate material such as breadcrumbs etc., as previously described. The edible particulate material passes via a line 32 to the mixer 28. After thorough mixing the edible particulate material passes via a line 34 to a dryer. As described, the oven 36 has a bed with an endless conveyor 38 with fine mesh. The mesh sizes are smaller than the particle sizes of the particulate material contained thereon. The bed is heated by hot air rising through the endless conveyor 38 helping to keep the particulate material free-flowing. The bed has a shute 42 which allows the particulate material to pass to a tray 44 for cooling. Once cooled, the coated particulate material is packed.

In operation, oil is provided by the tank 12 to the heating element 18 in oil reservoir 16. The oil is generally heated to the required temperature which in the case of fat is sufficient to make it liquid. This is a preheating step and may be omitted if not required. The preheated oil passes to the spray head 22 and air is injected into the oil to ensure that a fine mist of oil coats the particulate material in the mixer 28. Edible particulate material is provided from the hopper 30 to the mixer 28 where it is thoroughly mixed and passed via a line 34 to the oven.

The oven is maintained within the temperature range of 105°C-300°C, although as already indicated, the most preferred range is between 125°C-225°C, in order that a flash frying effect may occur. Once heat treated for a predetermined time, which again may be in the period of between 15 seconds to 25 minutes depending on the temperature of the oil. At lower temperatures, the process takes longer than at a higher temperature. Thus, at 300°C a minimum time is required in the oven. The edible particulate material and oil mix is generally heated by a draught of hot air provided within the oven causes the particles to be suspended on the conveyor 38 and the particulate material is conveyed to a cooling tray 44 via chute 42.

The product is removed from the oven to cool. At this point in the process it can be packed (if required) or be used for subsequent coating onto edible material.

The product of the present invention is useful for coating all types of material including meat, fish, poultry, potatoes, vegetables and myco-protein. The coating material can be used for products which are to be served fresh or from the frozen state. To apply the coated material of the present invention to the product is passed through a curtain of batter to dampen the surface of the product and provide some adhesive property to the product. Subsequently, the material passes to a further stage of the process and through a curtain of the oil treated edible particulate material. The adhesive property causes the edible particulate material to stick to the final product which is then ready for packing or freezing as required.

By using the treated edible particulate material of the present invention, the final product of, fish, poultry, meat, myco-Protein, potato, etc., may only have a fat content of up to 3% by total weight of the food product. It appears that the reason for this is that the oil or fat is contained uniformly within the edible particulate material and not around the total product as has previously been the case. In conventional processes for preparing coated food products such as meat, the fat or oil level, introduced by the edible particulate material and the method by which it is applied to the product, is generally in the region of 7%-15% by weight of the product. The present invention allows the edible particulate product to be prefried before it is applied to the final product reducing the final oil levels in the product.

One of the advantages of the present invention is that no total immersion process during the cooking of the edible particulate material which can be dangerous because of high fire risk.

Disadvantages of the total immersion process are that it uses a large amount of energy and induces a large weight loss when cooking the final product.

By using the treated edible particulate material of the present invention, there is no weight loss in the material to be coated as this is not cooked at the present stage. Weight loss only occurs when the consumer finally cooks the coated material and this can be considerably reduced.

Examples of the present invention will now be described to clarify the processes described. These examples are illustrative and are not limiting to the invention. All parts are by weight unless otherwise indicated.

Example 1

Yeast raised baked bread cooked in conventional bread ovens is staled by vacuum cooling or by allowing the bread to stand for 24 hours. The bread is milled in a knife mill before processing. No drying of the bread takes place other than that which occurs naturally by standing. The material is placed in a ribbon blender and $7^1/_2$% by weight of liquid corn oil based on the total composition is sprayed onto the product while in the ribbon blender. Blending is completed in approximately 2 minutes when an even distribution of the oil has been achieved throughout the mix.

The oil coated crumb is processed in an oven having a bed with an endless conveyor with a fine mesh. Hot air is passed through the mesh to keep the paticulate material free flowing. The temperature is maintained at 210°C for $2^1/_2$ minutes to create a breadcrumb suitable for coating on food products for subsequent grilling or baking.

The breadcrumbs product retains 10% by weight of oil and has a golden appearance in variable hues.

Example 2

Yeast raised baked bread cooked in conventional ovens is staled by vacuum cooling and milled in a knife mill. The milled bread is dried with a continuous air dryer by hot air. The material once dried is placed in a ribbon blender and 10% by weight of liquid corn oil based on the total composition is dispersed into the blender. Blending is completed in approximately 2 minutes providing an even distribution of the oil throughout the mix.

The coated crumb is passed through an oven having an endless conveyor with fine mesh. Hot air is passed through the mesh to keep the particulate material free flowing and it is retained at a temperature 220°C for 45 seconds.

The product is a breadcrumb suitable for coating on foodstuffs for subsequent grilling or baking. The final coated product retains 10% by weight of oil in the breadcrumb and has a lighter golden appearance in variable golden hues than the product of Example 1.

## Example 3

An edible granular coating is manufactured in a cooker extruder such as a Creusot-Loire cooker extruder of from solely farinaceous starches together with additives such as sugar, whey powder, gluten, soya oil, colours, emulsifiers and spices to form a dough rope which is subsequently chopped and centrifugally milled. The granular material is at a moisture content of between 5 and 30% dependent on the extrusion conditions from the Creusot-Loire cooker extruder.

Dry material was metered into a continuous ribbon blender with 10% added butter oil sprayed through a spray nozzle above the blender from a heated feed tank. This coated material is then heat treated in an oven with an endless conveyor having a fine mesh. The bed is heated by hot air rising through the endless conveyor to keep the particulate material free flowing. The heating process took place at 165°C for 10 minutes. The product is a particulate material with golden hues.

## Example 4

Example 3 was repeated using a rice flour. A similar golden hued particulate material was formed.

## Claims

1. A method of preparing edible particulate material for coating foodstuff, which comprises homogeneously mixing edible particulate material comprising bread crumb, expanded starch or Japanese crumb, or based on potatoes or rice, with edible oil or fat at a temperature which keeps the oil or fat liquid and, simultaneously with or after the mixing step, heat treating the mixture in air which is at a temperature in the range of 105°C to 300°C, the resulting mixture being held at that temperature for a period of time in the range of 15 seconds to 25 minutes before it is applied to the foodstuff.

2. A method as claimed in claim 1, in which the step of heat treating the mixture is carried out after the edible particulate material and the edible oil or fat are mixed.

3. A method as claimed in claim 1 or claim 2, in which the amount of oil or fat which is mixed with the edible particulate material is from 5% to 35%, preferably from 7.5% to 25%, by weight of the edible particulate material.

4. A method as claimed in any one of the preceeding claims, in which the heat treatment takes place at a temperature in the range of 105°C to 250°C preferably 125°C to 225°C.

5. A method as claimed in any one of the preceding claims, in which the melting point of the oil or fat is less than 60°C, preferably less than 37°C.

6. A method as claimed in any one of the preceding claims, in which the oil or fat is corn oil, soya oil, sunflower oil, butter oil, rape seed oil, hydrogenated vegetable oil, or cocoa butter.

7. A method as claimed in any one of the preceding claims, in which the mixture is heat treated in a hot air dryer, a ring dryer or a hot air fluid bed dryer.

8. A method of making a food product, which comprises coating a food item with edible particulate material which has been made by the method claimed in claim 1.

9. A method as claimed in claim 8, which includes the step of coating the product with a layer of a batter prior to coating it with the edible particulate material.

## Patentansprüche

1. Verfahren zur Herstellung von teilchenförmigem, eßbarem Material zur Beschichtung von Lebensmitteln, welches folgende Schritte umfaßt :
- homogene Mischung teilchenförmigen, eßbaren Materials, welches Brotkrümel, expandierte Stärke oder japanische Krümel umfaßt oder ein Material auf Kartoffel- oder Reisbasis, mit eßbarem Öl oder Fett bei einer Temperatur, bei welcher das Öl oder Fett flüssig ist,
- Erhitzen des Gemischs gleichzeitig mit oder nach dem Mischungsschritt in Luft eines Temperaturbereichs zwischen 105°C und 300°C,
- Halten des resultierenden Gemischs bei dieser Temperatur während einer Zeit zwischen 15 Sekunden und 25 Minuten bevor es auf das Lebensmittel aufgebracht wird.

2. Verfahren nach Anspruch 1, bei dem der Schritt der Wärmebehandlung der Mischung nach der Mischung des teilchenförmigen, eßbaren Materials und des eßbaren Öls oder Fetts ausgeführt wird.

3. Verfahren nach Anspruch 1 oder 2, bei dem die Menge des Öls oder Fetts, die mit dem teilchenförmigen, eßbaren Material gemischt wird, 5 bis 35 Gew.-%, vorzugsweise 7,5 bis 25 Gew.-% des teilchenförmigen eßbaren Materials beträgt.

4. Verfahren nach einem der vorangehenden Ansprüche, bei dem die Wärmebehandlung bei einer Temperatur im Bereich von 105°C bis 250°C, vorzugsweise 125°C bis 225°C, stattfindet.

5. Verfahren nach einem der vorangehenden Ansprüche, bei dem der Schmelzpunkt des Öls oder Fetts unter 60°C, vorzugsweise unter 37°C liegt.

6. Verfahren nach einem der vorangehenden Ansprüche, bei dem das Öl oder Fett Maisöl, Sojaöl, Sonnenblumenöl, Butteröl, Rapsöl, hydriertes Pflanzenöl oder Kokosbutter ist.

7. Verfahren nach einem der vorangehenden Ansprüche, bei dem die Mischung in einem Heißlufttrockner, einem Ringtrockner oder in einem Heißluft-Fließbetttrockner wärmebehandelt wird.

8. Verfahren zur Herstellung eines Nahrungsmittelproduktes, das die Beschichtung eines Nahrungsmittels mit teilchenförmigem, eßbarem Material umfäßt, welches nach dem Verfahren gemäß Anspruch 1 hergestellt wurde.

9. Verfahren nach Anspruch 8, das den Schritt der Beschichtung des Produkts mit einer Teigschicht vor der Beschichtung mit dem teilchenförmigen, eßbaren Material einschließt.

**Revendications**

1. Procédé de préparation d'une matière comestible en particules destinée au revêtement d'un produit alimentaire, qui consiste à mélanger de manière homogène une matière comestible en particules consistant en chapelure, en amidon expansé ou en chapelure japonaise, ou bien en une matière à base de pommes de terre ou de riz, à une huile ou matière grasse comestible à une température qui maintient l'huile ou la matière grasse à l'état liquide et, simultanément avec ou après l'étape de mélange, à soumettre le mélange à un traitement thermique dans de l'air qui est à une température comprise dans l'intervalle de 105°C à 300°C, le mélange résultant étant maintenu à cette température pendant un temps compris dans l'intervalle de 15 secondes à 25 minutes avant son application au produit alimentaire.

2. Procédé suivant la revendication 1, dans lequel l'étape de traitement thermique du mélange est mise en oeuvre après le mélange de la matière comestible en particules et de l'huile ou de la matière grasse comestible.

3. Procédé suivant la revendication 1 ou la revendication 2, dans lequel la quantité d'huile ou de matière grasse qui est mélangée à la matière comestible en particules est comprise dans l'intervalle de 5 % à 35 %, de préférence de 7,5 % à 25 %, en poids de la matière comestible en particules.

4. Procédé suivant l'une quelconque des revendications précédentes, dans lequel le traitement thermique s'effectue à une température comprise dans l'intervalle de 105°C à 250°C, de préférence de 125°C à 225°C.

5. Procédé suivant l'une quelconque des revendications précédentes, dans lequel le point de fusion de l'huile ou de la matière grasse est inférieur à 60°C, de préférence inférieur à 37°C.

6. Procédé suivant l'une quelconque des revendications précédentes, dans lequel l'huile ou la matière grasse est l'huile de maïs, l'huile de soja, l'huile de tournesol, l'huile de beurre, l'huile de colza, une huile végétale hydrogénée ou le beurre de cacao.

7. Procédé suivant l'une quelconque des revendications précédentes, dans lequel le mélange est soumis à un traitement thermique dans un déshydrateur à air chaud, un déshydrateur annulaire ou un déshydrateur à lit fluidisé par air chaud.

8. Procédé de préparation d'un produit alimentaire, qui consiste à revêtir un aliment avec une matière comestible en particules qui a été préparée par le procédé suivant la revendication 1.

9. Procédé suivant la revendication 8, qui comprend l'étape consistant à revêtir le produit avec une couche d'une pâte à frire avant le revêtement de ce produit avec la matière comestible en particules.

EP 0 237 162 B1